# DEMANDE DE BREVET EUROPEEN

(11) **EP 1 878 659 A2**
(43) Date de publication de la demande: **16.01.2008**
(21) Numéro de dépôt: 07005414.3
(22) Date de dépôt: 01.03.2005
(51) Int. Cl.: B64C 31/06, A63H 27/08, B63B 35/79

(54) **Aile à dièdre négatif de traction d'une charge**

(30) Priorité: 01.03.2004 FR 0402094
(62) Demande divisionnaire de: 05290457.0
(71) Demandeur: Diamond White Serviços de Consultoria Lda, 9004 Funchal, Madeira (PT)
(72) Inventeur: Legaignoux, Dominique, Las Terrenas (DO); Legaignoux, Bruno, Las Terrenas (DO)
(74) Mandataire: Blot, Philippe Robert Emile

(57) **Abrégé**

L'aile (10) à dièdre négatif de traction d'une charge comporte une voilure souple (12) définie entre deux extrémités latérales (14A, 14B) reliées entre elles, à l'avant, par un bord d'attaque et, à l'arrière, par un bord de. L'aile comporte des lignes arrière (40A, 40B) reliées aux organes de suspension (30A, 30B) disposées aux extrémités latérales (14A, 14B) de l'aile. Des moyens auxiliaires de maintien de la plage médiane propulsive (16) comportent au moins une ligne avant reliée par une extrémité à la plage médiane propulsive au voisinage du bord d'attaque et propre à être reliée à la charge à son autre extrémité. Les lignes avant comportent un ensemble de suspentes (90A, 90B) appliquées à la plage médiane propulsive (16) en des points répartis suivant la longueur du bord d'attaque, au moins une suspente coulissante (90A, 90B) étant engagée de manière coulissante dans un guide (92A, 92B) solidaire du bord d'attaque, l'extrémité de la suspente coulissante (90A, 90B) étant solidarisée à une ligne arrière (40A, 40B).

## Description

La présente invention concerne une aile propulsive à dièdre négatif de traction d'une charge, du type comportant une voilure souple définie entre deux extrémités latérales reliées entre elles, à l'avant par un bord d'attaque et, à l'arrière par un bord de fuite, la voilure présentant, entre ces deux extrémités latérales, une plage médiane propulsive bordée de part et d'autre par deux plages de gouverne, l'aile comportant au moins un organe de suspension de la charge au voisinage de chaque extrémité latérale et des moyens auxiliaires de maintien propres à aplatir la plage médiane propulsive au voisinage du bord d'attaque, lors du vol.

Il est connu d'utiliser des ailes propulsives, parfois appelées "cerfs-volants", pour la traction ou la sustentation d'une charge. De telles ailes propulsives sont utilisées dans certains sports de glisse, notamment des sports aquatiques. Tel est le cas par exemple du sport désigné en anglais par "kite boarding", où un utilisateur a les pieds reliés à une planche lui permettant de glisser à la surface de l'eau, alors que le corps de l'utilisateur est relié à une aile propulsive, lui permettant de se déplacer.

La plupart des ailes propulsives utilisées actuellement sont constituées d'une voilure souple à dièdre négatif prononcé reliée à l'utilisateur par des lignes fixées aux extrémités latérales de l'aile, ou le long du bord d'attaque, c'est-à-dire que les extrémités latérales de l'aile sont situées à un niveau inférieur à la plage médiane de l'aile lors de son utilisation. L'aile a alors, de face, une forme approximativement demi-circulaire tournée vers le bas, forme dictée par le vent, les forces aérodynamiques, et non par la rigidité de la structure.

Une aile propulsive de ce type est décrite par exemple dans le document EP-0.202.271. Cette aile présente la forme générale d'un fuseau sphérique.

Il est généralement admis qu'un gain de performances de l'aile peut être obtenu en aplatissant la voilure dans sa plage médiane. Cet aplatissement accroît également la sécurité de l'utilisateur, dans le cas ou l'aile est équipée de plus de deux lignes de vol, en permettant une ouverture du profil et une réduction plus importante de la puissance de l'aile, lorsque celle-ci est soumise à des rafales de vent ou lorsque l'utilisateur perd le contrôle de l'aile. En effet, la ou les lignes avant étant fixées plus haut sur le bord d'attaque que sur les ailes en fuseau sphérique, la rotation du profil de l'aile est plus importante lorsqu'on relâche les lignes arrière.

Afin d'assurer un tel aplatissement de la plage médiane de l'aile, il a été proposé de munir la plage médiane du bord d'attaque de l'aile d'un espar rectiligne assurant l'aplatissement du bord d'attaque de l'aile.

On constate qu'en vol, l'aile munie d'un tel espar présente un bord d'attaque aplati, alors que le bord de fuite tend à garder sa forme lobée. Il en résulte que les deux plages de gouverne bordant la plage médiane de l'aile se trouvent trop inclinées l'une vers l'autre vers l'arrière de l'aile, créant une traînée importante qui réduit la vitesse de l'aile. Une telle aile a notamment été proposée sous la marque GAASTRA.

Par ailleurs, une aile commercialisée sous la marque FLEX présente un ensemble de suspentes formant brides solidarisées seulement suivant le bord d'attaque de l'aile. Un espar rigide assure de plus l'aplatissement médian du bord d'attaque. L'aile a une forme générale de fuseau ellipsoïdal avec un bord d'attaque et un bord de fuite convexes. On constate, en vol, un léger mais modeste aplatissement du bord d'attaque alors que le bord de fuite n'est pas du tout aplati et conserve une forme lobée. Comme pour l'aile précédente, cet agencement crée une traînée importante.

Une autre solution proposée consiste à équiper l'aile sur l'essentiel de la surface de la voilure, de suspentes formant brides. Ces suspentes sont régulièrement réparties sur la surface de la voilure suivant des rangées s'étendant du bord d'attaque au bord de fuite. Elles sont reprises directement ou indirectement sur l'utilisateur. La multitude de suspentes reliées à la voilure augmente la traînée aérodynamique et crée dans la voilure des lobes entre chaque rangée de brides, de sorte que les performances de l'aile sont amoindries.

L'invention a pour but de proposer une aile propulsive dont la plage médiane propulsive est relativement plate, aussi bien au niveau du bord d'attaque que du bord de fuite, et est parfaitement tendue, sans dégradation des performances aérodynamiques.
A cet effet, l'invention a pour objet une aile propulsive à dièdre négatif de traction d'une charge, du type précité, caractérisée en ce qu'elle comporte des lignes arrière reliées aux organes de suspension disposées aux extrémités latérales de l'aile, et en ce que les moyens auxiliaires de maintien de la plage médiane propulsive comportent au moins une ligne avant reliée par une extrémité à la plage médiane propulsive au voisinage du bord d'attaque et propre à être reliée à la charge à son autre extrémité, la ou chaque ligne avant comportant un ensemble de suspentes appliquées à la plage médiane propulsive en des points répartis suivant la longueur du bord d'attaque, au moins une suspente coulissante étant engagée de manière coulissante dans un guide solidaire du bord d'attaque, l'extrémité de la suspente coulissante étant solidarisée à une ligne arrière.

Suivant des modes particuliers de réalisation, l'aile propulsive comporte l'une ou plusieurs des caractéristiques suivantes :
- le bord de fuite de l'aile est généralement concave,
- la voilure présente, en vol, vue de dessus, une forme générale arquée vers le bord de fuite ;
- la plage médiane est dépourvue, excepté au voisinage du bord d'attaque de tout moyen auxiliaire de maintien propre à aplatir, en vol, la plage médiane propulsive ;
- l'allongement aérodynamique de l'aile est supérieur à 3 ;
- le centre de poussée de chaque section des plages de gouverne est en arrière du centre de poussée de chaque section de la plage médiane propulsive ;
- la ou chaque ligne comporte un ensemble de suspentes reprises à une extrémité sur la charge à tracter et dont les autres extrémités sont liées à la plage médiane propulsive en étant réparties suivant la longueur du bord d'attaque ;
- les moyens auxiliaires de maintien de la plage médiane propulsive au voisinage du bord d'attaque comportent un espar de rigidification solidarisé suivant le bord d'attaque ;
- la ligne des centres de poussée des sections de la voilure en vol d'une extrémité latérale à l'autre décrit la forme d'une courbe dont le centre de courbure en tout point est situé du côté du bord de fuite ;
- elle comporte des lignes arrière reliées aux organes de suspension disposés aux extrémités latérales de l'aile, les moyens auxiliaires de maintien de la plage médiane propulsive comportant au moins une ligne avant reliée par une extrémité à la plage médiane propulsive au voisinage du bord d'attaque et propre à être reliée à la charge à son autre extrémité, la ou chaque ligne avant comportant un ensemble de suspentes appliquées à la plage médiane propulsive en des points répartis suivant la longueur du bord d'attaque, au moins une suspente coulissante étant engagée de manière coulissante dans un guide solidaire du bord d'attaque, l'extrémité de la suspente coulissante étant solidarisée à une ligne arrière ;
- le guide est supporté de manière coulissante sur une boucle déformable liée en deux points distants du bord d'attaque ;
- elle comporte des lignes arrière reliées aux organes de suspension disposés aux extrémités latérales de l'aile, les moyens auxiliaires de maintien de la plage médiane propulsive comportant au moins une suspente reliée, à une extrémité, au bord d'attaque et, à son autre extrémité, à une ligne arrière ;
- elle comporte un dispositif de manoeuvre comprenant une barre de commande dont les extrémités sont reliées aux extrémités latérales de la voilure par des lignes arrière et au moins une ligne de traction reliée à la voilure en avant des lignes arrière par au moins une ligne avant, laquelle ligne de traction comporte des moyens de liaison au corps de l'utilisateur, lesquels moyens de liaison comportent au moins une poulie engagée dans une boucle de la ou de chaque ligne de traction dont l'extrémité est solidarisée à la barre de commande, la poulie comportant des moyens de liaison de son axe au corps de l'utilisateur ; et
- les moyens de liaison de l'axe de la poulie au corps de l'utilisateur comportent une poulie complémentaire engagée dans une boucle d'un brin de rappel dont une extrémité est fixée à l'axe de la poulie et dont l'autre extrémité est fixée à la ou à chaque ligne de traction, la poulie complémentaire comportant des moyens de liaison de son axe au corps de l'utilisateur.

L'invention sera mieux comprise à la lecture de la description qui va suivre, donnée uniquement à titre d'exemple et faite en se référant aux dessins, sur lesquels :
- la figure 1 est une vue de face d'une aile propulsive, représentée en vol ;
- la figure 2 est une vue en perspective de l'aile de la figure 1 représentée en vol ;
- La figure 3 est une vue de côté de l'aile des figures 1 et 2, représentée en vol ;
- la figure 4 est une vue de dessus en plan de l'aile des figures précédentes, c'est-à-dire en projection à plat ;
- les figures 4A et 4B sont des vues identiques à celle de la figure 4 de variantes de réalisation de la forme de l'aile ;
- la figure 5 est une vue de face d'une variante de réalisation d'une aile ;
- les figures 6, 7 et 8 sont des vues de face de variantes de réalisation de l'aile propulsive ;
- la figure 9 est une vue schématique en perspective d'un dispositif de manoeuvre de l'aile propulsive, l'aile étant représentée avec une taille réduite ; et
- la figure 10 est une vue en perspective du dispositif de manoeuvre de la figure 9.

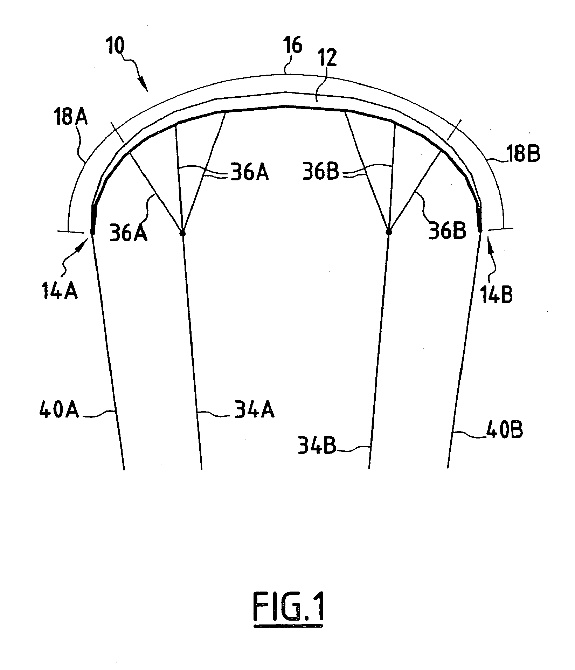

L'aile propulsive 10 représentée sur les figures 1 à 4 est destinée à la traction d'une charge, telle qu'un sportif dont les pieds sont solidarisés sur une planche. L'aile propulsive comporte une voilure souple 12 définie entre deux extrémités latérales 14A, 14B. La voilure 12 présente, entre ses deux extrémités latérales 14A, 14B, une plage médiane propulsive 16 bordée de part et d'autre par deux plages de gouverne 18A, 18B.

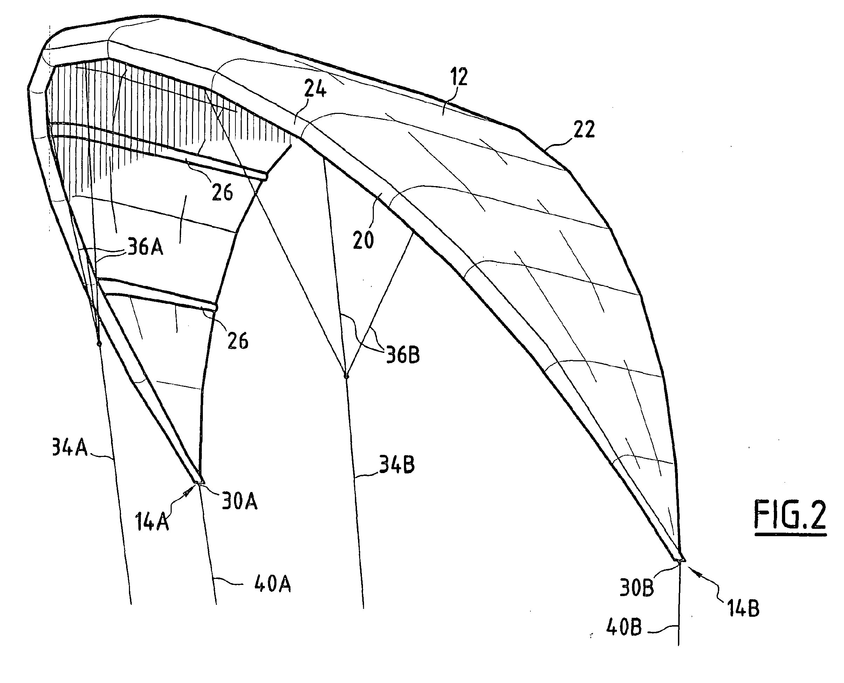

La voilure 12 présente à l'avant un bord d'attaque 20 et à l'arrière un bord de fuite 22 visibles sur la figure 2. Ils s'étendent tous deux d'une extrémité latérale 14A à l'autre 14B. La voilure 12 s'étend entre les deux bords 20, 22 pour définir une surface gauche continue.

L'aile propulsive est à dièdre négatif, c'est-à-dire qu'elle présente, vue de face, une forme arquée dont la concavité est tournée vers la charge suspendue.

Plus précisément, les deux plages de gouverne 18A, 18B sont situées à un niveau inférieur à celui de la plage propulsive 16.

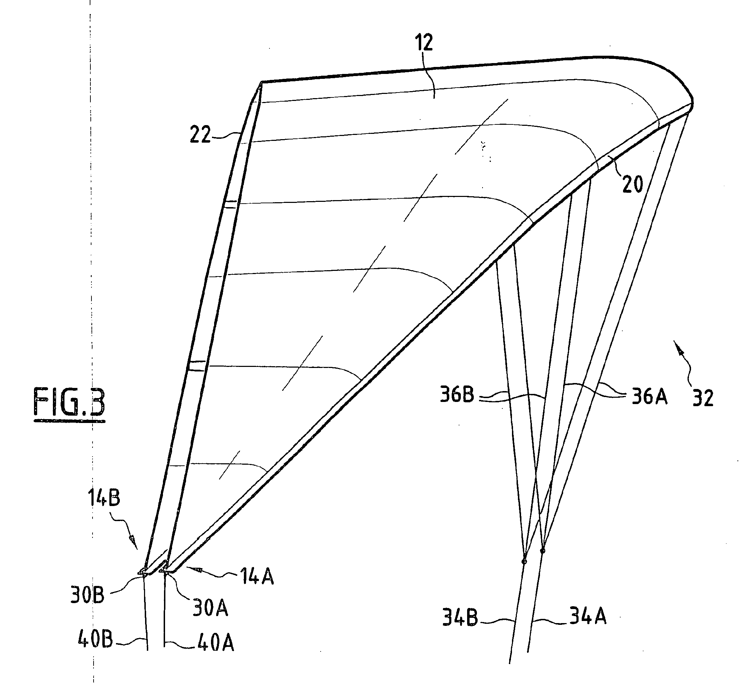

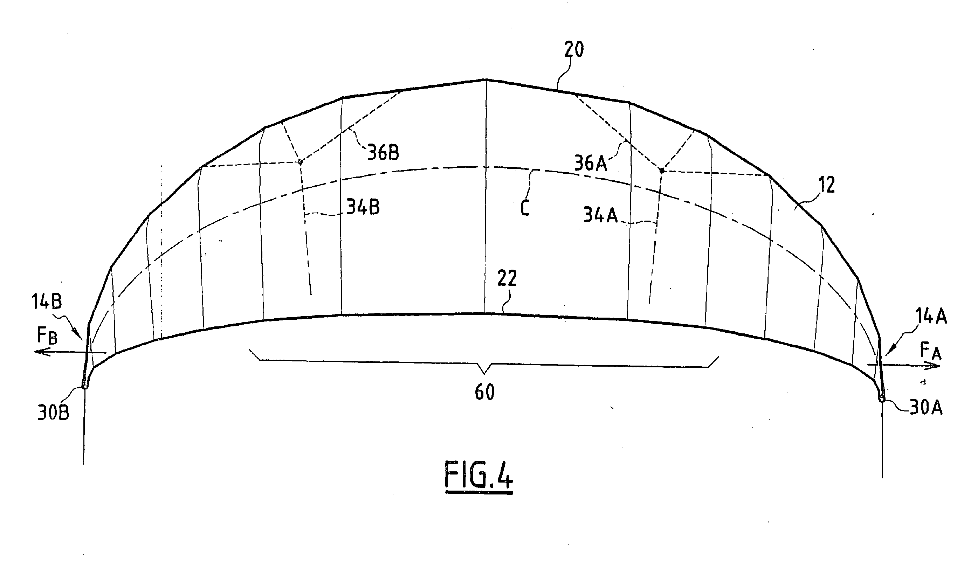

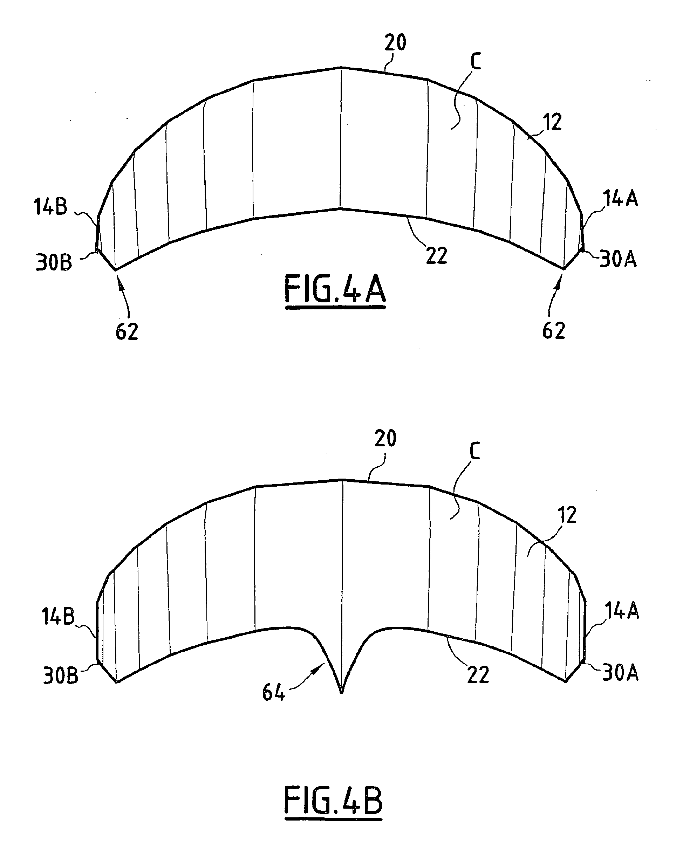

Comme illustré sur les figures 3 et 4, la largeur de la voile, mesurée longitudinalement entre le bord d'attaque 20 et le bord de fuite 22, décroît de manière symétrique depuis la plage médiane de l'aile jusqu'aux extrémités latérales 14A, 14B. Suivant le bord d'attaque de l'aile, la voilure 12 est supportée par un boudin principal gonflé 24 s'étendant d'une extrémité latérale 14A à l'autre extrémité latérale 14B. Ce boudin présente globalement une forme de croissant de lune aplati. Son diamètre est progressivement décroissant de sa plage médiane vers ses extrémités. La voilure est solidarisée à l'avant suivant le boudin gonflé 24.

Des longerons 26 sont répartis régulièrement suivant la longueur du boudin principal 24 et s'étendent du bord d'attaque 20 au bord de fuite 22 de l'aile. Ils sont constitués chacun d'un boudin gonflé. Ces boudins sont reliés, à leur extrémité avant, au boudin principal 24. La voilure 12 est solidarisée aux longerons 26 sur toute leur longueur, ces longerons étant situés au-dessous de la voilure, c'est-à-dire du côté de la charge à tracter.

A chacune des extrémités latérales, l'aile propulsive comporte un organe 30A, 30B de suspension de la charge à tracter. Cet organe est constitué par exemple d'un anneau pour l'ancrage d'une suspente, ou encore par une sangle cousue à l'extrémité de la voilure.

Les profils, c'est-à-dire les sections longitudinales de la voilure 12 peuvent avoir toute forme aérodynamique connue, ils ne nécessitent pas une forme aérodynamique particulière pour que l'aile fonctionne. Ils sont avantageusement concaves, c'est-à-dire que leur courbure ne comporte pas de point d'inflexion, la courbure étant toujours orientée dans le même sens.

Le bord de fuite présente, en vue de dessus, une forme générale arquée vers l'arrière ou encore une forme généralement concave.

Le bord d'attaque 20 est seul associé à des moyens auxiliaires de maintien 32 propres à aplatir la plage médiane du bord d'attaque 20, lors du vol. Ces moyens de maintien 32 sont appliqués au voisinage du bord d'attaque.

Au sens du présent document, l'expression au voisinage du bord d'attaque signifie suivant le bord d'attaque ou entre le bord d'attaque et la ligne des centres de poussée de l'aile, les moyens de maintien étant ainsi en avant du centre de poussée de chaque section en considérant le sens d'avancement de l'aile.

Sur la figure 4 est représentée, par une ligne C, la position du centre de poussée associé à chaque (profil ou section) de la voilure suivant la longueur de la voilure d'une extrémité latérale 14A à l'autre 14B.

La forme arquée vers l'arrière de la voilure est obtenue lorsque le centre de poussée est d'autant plus en avant que la section considérée est proche de l'axe longitudinal de l'aile. En particulier, le centre de poussée d'une section des plages de gouverne 18A, 18B est en arrière du centre de poussée d'une section de la plage médiane propulsive 16 de l'aile.

Comme illustré sur les figures 1 et 3, les moyens auxiliaires 32 de maintien propres à aplatir la partie avant de la plage médiane de l'aile lors du vol comportent par exemple deux lignes avant 34A, 34B comportant chacune un faisceau de trois suspentes convergentes 36A, 36B reliées ensemble par une extrémité commune. L'autre extrémité de chaque suspente est reliée en un point au voisinage du bord d'attaque 20. Les différents points de liaison des suspentes 36A, 36B sur le bord d'attaque 20 sont répartis suivant la longueur de sa partie médiane.

Les suspentes 36A, 36B de chaque faisceau se relient ensemble pour former une ligne avant 34A, 34B, elle-même solidarisée à la charge à tracter.

La longueur des différentes suspentes 36A, 36B est choisie de sorte que, par traction sur l'extrémité libre des lignes avant 34A, 34B, les suspentes reliées dans la plage médiane de la voilure, assurent une retenue plus importante de la voilure que les suspentes disposées aux extrémités de cette plage médiane, assurant ainsi un aplatissement du bord d'attaque de la voilure dans la plage médiane propulsive de celle-ci.

En variante, les moyens auxiliaires de maintien 32 comportent non pas des suspentes mais un espar rigide rapporté sur le bord d'attaque ou au voisinage du bord d'attaque, assurant ainsi un maintien du bord d'attaque dans la plage médiane de l'aile suivant un profil généralement rectiligne.

Pour assurer la traction de la charge, et comme connu en soi, la charge est reliée aux extrémités latérales 14A, 14B par deux lignes supplémentaires arrière 40A, 40B solidarisées aux organes de suspension 30A, 30B et est reliée à l'avant de la plage médiane par au moins une ligne.

Avec une telle aile, on comprend que la présence des moyens auxiliaires de maintien 32 sur le seul voisinage du bord d'attaque suffise à assurer un aplatissement de la voilure dans la plage médiane du bord d'attaque.

En outre, lors du vol, la voilure est sollicitée par une force de portance s'étendant généralement perpendiculairement à la surface de la voilure. Les plages de gouverne 18A, 18B sont ainsi soumises à des forces de portance opposées F_{A}, F_{B}. Ces forces s'appliquent sur la plage médiane du bord de fuite notée 60 sur la figure 4. Cette plage médiane 60 se trouve maintenue tendue par l'action des forces de portance F_{A}, F_{B} opposées appliquées sur les plages de gouverne 18A, 18B. Cette tension conduit à un aplatissement de la plage médiane du bord de fuite, du seul fait du déport vers l'arrière des plages de gouverne lié au bord de fuite globalement concave.

Dans la mesure où le bord d'attaque 22 est maintenu aplati dans sa plage médiane par les moyens auxiliaires de maintien, et que la partie arrière propulsive au voisinage du bord de fuite est elle aussi aplatie par action des forces de portance opposées appliquées sur les plages de gouverne placées en arrière, toute la plage médiane propulsive 16 de la voilure se trouve maintenue aplatie, bien que des moyens auxiliaires de maintien soient appliqués seulement au voisinage du bord d'attaque.

L'aplatissement homogène de la plage médiane propulsive de la voilure permet que les plages de gouverne soient maintenues approximativement parallèles l'une à l'autre, permettant un bon écoulement du flux d'air autour de l'aile et évitant une traînée trop importante de l'aile.

De plus, la plage médiane propulsive 16 étant dépourvue de moyens auxiliaires de maintien, sauf au voisinage de son bord d'attaque 20, l'aile présente de bonnes qualités aérodynamiques, du fait de la très grande régularité de sa surface.

Pour une telle aile, l'allongement aérodynamique de l'aile est supérieur à 3. L'allongement aérodynamique est égal au carré de l'envergure divisé par la surface de l'aile. L'envergure est arbitrairement choisie comme celle de l'aile dégonflée à plat et la surface est la surface développée de la voilure.

Dans la variante de réalisation de l'aile représentée sur la figure 4A, la courbure du bord de fuite 22 s'inverse seulement au voisinage immédiat de ses extrémités sur une longueur de quelques dizaines de centimètres, dans une région notée 62.

Dans la variante de réalisation de l'aile représentée sur la figure 4B, la courbure du bord de fuite 22 s'inverse seulement au voisinage immédiat de l'axe médian de l'aile pour former une queue médiane 64 d'une largeur de quelques dizaines de centimètres.

Ainsi, dans ces différentes variantes de réalisation, le bord de fuite présente une forme généralement concave permettant ainsi un aplatissement du bord de fuite dans la plage médiane propulsive, même si, localement, ce bord de fuite n'est pas concave.

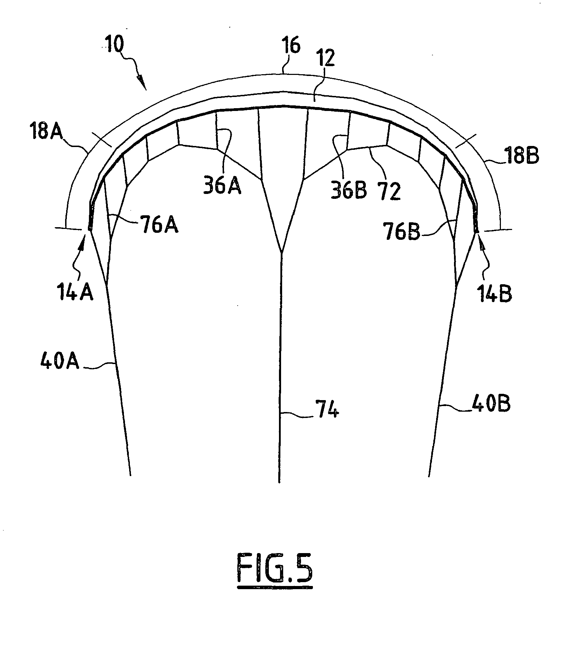

Suivant encore une variante illustrée sur la figure 5, l'aile comporte seulement une ligne avant disposée en position centrale au voisinage du bord d'attaque et deux lignes arrière.

Dans ce mode de réalisation, les suspentes 36A, 36B, dont une extrémité est fixée à la plage médiane du bord d'attaque, sont réparties régulièrement suivant toute la longueur de la plage médiane du bord d'attaque. Elles sont reliées les unes aux autres par une ligne de liaison 72.

Une unique ligne centrale avant 74 est solidarisée à la ligne de liaison 72 dans le plan longitudinal médian de l'aile, c'est-à-dire au droit de la partie centrale du bord d'attaque.

En outre, les plages de gouverne 18A, 18B sont également équipées suivant le bord d'attaque 20 de suspentes 76A, 76B réparties jusqu'aux extrémités du bord d'attaque. Ces suspentes sont reliées entre elles et aux suspentes 36A, 36B par le prolongement de part et d'autre de la ligne de liaison 72.

Les suspentes 76A, 76B et les extrémités de la ligne de liaison 72 sont reliées aux lignes arrière 40A, 40B.

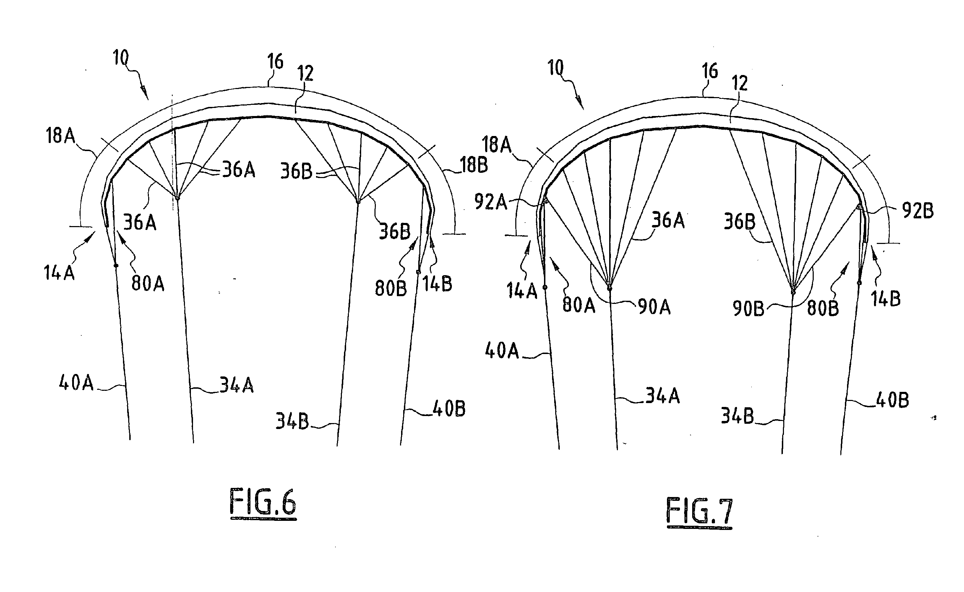

Suivant une autre variante illustrée sur la figure 6, les suspentes 36A, 36B aboutissent en faisceaux aux lignes avant 34A, 34B. Ces suspentes sont au nombre de cinq. Par ailleurs, une ou plusieurs suspentes 80A, 80B aboutissent aux lignes arrière 40A, 40B. Ces suspentes 80A, 80B aboutissant aux lignes arrière sont liées, à leur autre extrémité, au bord d'attaque 20 au voisinage de ses extrémités, c'est-à-dire à proximité des extrémités latérales 14A, 14B de la voilure.

Dans le mode de réalisation selon l'invention de la figure 7, cinq suspentes 36A, 36B aboutissent par faisceaux aux lignes avant 34A, 34B. En outre, une ligne supplémentaire 90A, 90B formant suspente est engagée dans une poulie 92A, 92B formant guide qui est fixée sur le bord d'attaque 20. Cette suspente 90A, 90B relie la ligne avant 34A, 34B à la ligne arrière 40A, 40B disposée du même côté.

Ces poulies 92A, 92B sont fixées sur le bord d'attaque 20 entre les suspentes 36A, 36B reliées aux lignes avant et les suspentes 80A, 80B reliées aux lignes arrière lorsque de telles suspentes reliées aux lignes arrière existent.

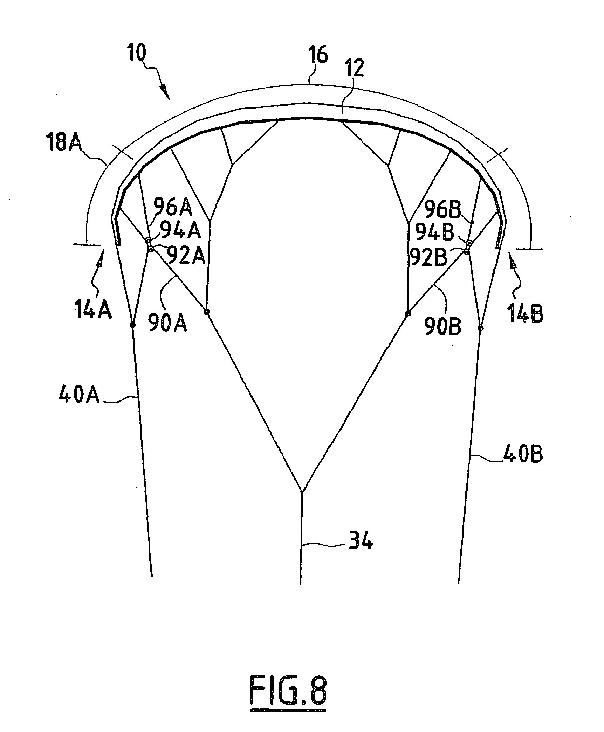

Une variante de réalisation est illustrée sur la figure 8. Dans ce mode de réalisation, les poulies 92A, 92B sont elles-mêmes portées par des poulies associées 94A, 94B. Ces poulies 94A, 94B sont engagées de manière coulissante sur une boucle 96A, 96B formée par un brin déformable dont les extrémités sont liées au bord d'attaque 20 en des points distants.

Comme dans le mode de réalisation précédent, les suspentes 90A, 90B sont liées, à une extrémité, aux lignes arrière 40A, 40B et, à leur autre extrémité, elles aboutissent sur une unique ligne avant 34.

Lors de l'utilisation de la voile, les poulies 92A, 92B et 94A, 94B se déplacent suivant la longueur des boucles 96A, 96B, alors que les suspentes 90A, 90B coulissent dans les poulies 92A, 92B, permettant une répartition équilibrée des forces reprises par les suspentes 90A, 90B entre les lignes avant et arrière.

Un agencement tel que décrit aux figures 6, 7 et 8 peut être mis en oeuvre avec tout type d'aile et en particulier avec une aile dont le bord de fuite n'est pas concave.

Pour l'utilisation d'une telle aile de traction, les quatre lignes 34A, 34B, 40A et 40B ou les trois lignes 74, 40A, 40B peuvent aboutir en un même point à la charge à tracter, les lignes arrière étant réglées en longueur pour diriger l'aile. En variante, les deux lignes avant sont fixées ensemble et les deux lignes arrière sont fixées sur une barre, ou les quatre lignes sont fixées sur une barre, les deux avant passant dans une poulie située plus bas que la barre, etc....

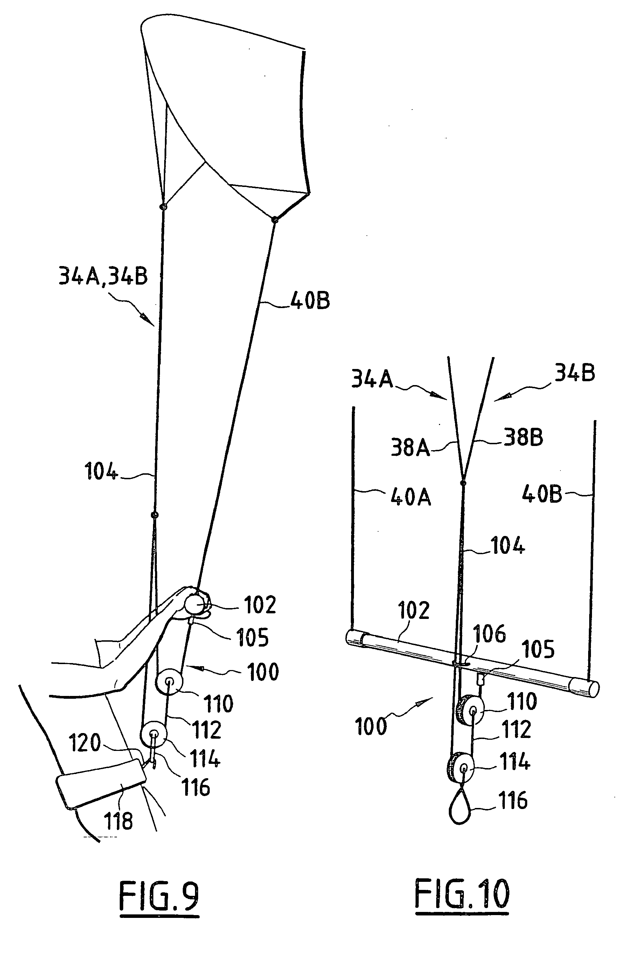

Toutefois, avantageusement ces lignes sont reliées à un dispositif de manoeuvre 100 tel qu'illustré sur les figures 9 et 10. Ce dispositif de manoeuvre 100 peut être utilisé avec d'autres types d'aile.

Le dispositif 100 comporte une barre de commande 102 généralement rectiligne destinée à être tenue à bout de bras par l'utilisateur. Les suspentes arrière 40A, 40B solidarisées aux extrémités latérales de l'aile 14A, 14B sont reliées aux extrémités de la barre 102.

En outre, les extrémités inférieures des lignes avant 34A, 34B assurant le maintien du bord d'attaque 20 de l'aile sont reliées l'une à l'autre et sont prolongées par une ligne de traction commune 104 dont l'autre extrémité est solidarisée en 105 dans la plage médiane de la barre 102.

Si une unique ligne avant 74 existe, celle-ci constitue la ligne de traction commune 104.

La ligne de traction commune 104 est montée coulissante au travers d'un anneau 106 solidaire de la barre 102 dans sa plage médiane. Une première poulie 110 est engagée sur la ligne de traction 104 et est maintenue dans une boucle inférieure de cette ligne entre le point de liaison 105 et l'anneau 106. L'axe de la poulie 110 est solidaire de l'extrémité d'un brin de rappel 112 dont l'autre extrémité est solidaire de la ligne de traction commune 104 dans la partie comprise entre l'anneau 106 et l'extrémité de liaison aux lignes avant 34A, 34B.

Une seconde poulie 114 est engagée sur le brin de rappel 112 dans une boucle inférieure de celle-ci. L'axe de la poulie 114 est équipé d'une boucle 116 pour l'accrochage du dispositif de manoeuvre à un harnais 118 équipé d'un crochet 120 porté par l'utilisateur ou la charge à tracter.

Le déplacement de la barre de commande 102 suivant la longueur de la ligne de traction commune 104 solidarisée au harnais permet d'assurer la commande de la voilure et notamment son inclinaison par rapport à l'horizontale, du fait de la modification de la position relative en hauteur de la plage médiane du bord d'attaque et des extrémités latérales de l'aile.

De plus, le basculement de la barre de commande 102 vers la droite ou vers la gauche permet de diriger l'aile par action des plages de gouverne 18A, 18B.

Du fait de la présence des deux poulies 110, 114, la force à appliquer par l'utilisateur pour déplacer la barre 102 le long de la ligne 104 est réduite à seulement 25 % de celle qui aurait dû être appliquée si l'extrémité de la ligne 104 était reliée directement au harnais sans poulie. Avec l'agencement décrit, 75 % de la force de traction exercée par l'aile est appliquée directement sur le harnais et non sur la barre de commande 102, du fait des reprises d'effort exercées par les poulies.

## Revendications

1. Aile (10) à dièdre négatif de traction d'une charge, comportant une voilure souple (12) définie entre deux extrémités latérales (14A, 14B) reliées entre elles, à l'avant, par un bord d'attaque (20) et, à l'arrière, par un bord de fuite (22), la voilure (12) présentant, entre ces deux extrémités latérales (14A, 14B), une plage médiane propulsive (16) bordée de part et d'autre par deux plages de gouverne (18A, 18B), l'aile comportant au moins un organe (30A, 30B) de suspension de la charge au voisinage de chaque extrémité latérale (14A, 14B) et des moyens auxiliaires (32) de maintien propres à aplatir la plage médiane propulsive (16) au voisinage du bord d'attaque (20), lors du vol, **caractérisée en ce qu'**elle comporte des lignes arrière (40A, 40B) reliées aux organes de suspension (30A, 30B) disposées aux extrémités latérales (14A, 14B) de l'aile, et **en ce que** les moyens auxiliaires (32) de maintien de la plage médiane propulsive (16) comportent au moins une ligne avant (34A, 34B) reliée par une extrémité à la plage médiane propulsive au voisinage du bord d'attaque (20) et propre à être reliée à la charge à son autre extrémité, la ou chaque ligne avant (34A, 34B) comportant un ensemble de suspentes (36A, 36B ; 90A, 90B) appliquées à la plage médiane propulsive (16) en des points répartis suivant la longueur du bord d'attaque (20), au moins une suspente coulissante (90A, 90B) étant engagée de manière coulissante dans un guide (92A, 92B) solidaire du bord d'attaque (20), l'extrémité de la suspente coulissante (90A, 90B) étant solidarisée à une ligne arrière (40A, 40B).

2. Aile propulsive selon la revendication 1, **caractérisée en ce que** le guide (92A, 92B) est supporté de manière coulissante sur une boucle déformable (96A, 96B) liée en deux points distants du bord d'attaque (20).

3. Aile selon la revendication 1 ou 2, **caractérisée en ce que** le bord de fuite (22) de l'aile est globalement concave.

4. Aile selon l'une quelconque des revendications précédentes, **caractérisée en ce que** la voilure (12) présente, en vol, vue de dessus, une forme générale arquée vers le bord de fuite (22).

5. Aile selon l'une quelconque des revendications précédentes, **caractérisée en ce que** la plage médiane (60) est dépourvue, excepté au voisinage du bord d'attaque (20) de tout moyen auxiliaire de maintien propre à aplatir, en vol, la plage médiane propulsive (16).

6. Aile selon l'une quelconque des revendications précédentes, **caractérisée en ce que** l'allongement aérodynamique de l'aile est supérieur à 3.

7. Aile selon l'une quelconque des revendications précédentes, **caractérisée en ce que** le centre de poussée de chaque section des plages de gouverne (18A, 18B) est en arrière du centre de poussée de chaque section de la plage médiane propulsive (16).

8. Aile propulsive selon l'une quelconque des revendications précédentes, **caractérisée en ce que** la ligne (C) des centres de poussée des sections de la voilure (12) en vol d'une extrémité latérale à l'autre (14A, 14b) décrit la forme d'une courbe dont le centre de courbure en tout point est situé du côté du bord de fuite (22).

9. Aile propulsive selon l'une quelconque des revendications précédentes, **caractérisée en ce qu'**elle comporte au moins une suspente (80A, 80B) reliée, à une extrémité, au bord d'attaque (20) et, à son autre extrémité, à une ligne arrière (40A, 40B).

10. Aile selon l'une quelconque des revendications précédentes, **caractérisée en ce que**, en section longitudinale, la voilure (12) est concave.

11. Aile selon l'une quelconque des revendications précédentes, **caractérisée en ce que** les moyens auxiliaires de maintien (32) sont disposés seulement entre le bord d'attaque (20) et la ligne (C) des centres de poussée de la voilure.
